# EUROPÄISCHE PATENTSCHRIFT

(11) **EP 4 264 100 B1**
(45) Veröffentlichungstag und Bekanntmachung des Hinweises auf die Patenterteilung: **22.07.2026**
(21) Anmeldenummer: 21839863.4
(22) Anmeldetag: 14.12.2021
(51) Int. Cl.: F16L 13/14, F16L 33/207

(54) **ROHRVERBINDUNG**
PIPE CONNECTION
RACCORD DE TUYAU

(30) Priorität: 17.12.2020 DE 202020107328 U
(43) Veröffentlichungstag der Anmeldung: 25.10.2023
(73) Patentinhaber: REHAU Industries SE & Co. KG, 95111 Rehau (DE)
(72) Erfinder: HOMBURG, Hansi, 91315 Höchstadt (DE); KIRCHBERGER, Andreas, 91074 Herzogenaurach (DE); SCHAAF, Thomas, 91315 Höchstadt (DE); VOCKS, Oliver, 90765 Fürth (DE)
(86) Internationale Anmeldenummer: PCT/EP2021/085719
(87) Internationale Veröffentlichungsnummer: WO 2022/129066

(56) Entgegenhaltungen:
- AU-C4- 2019 100 400
- DE-A1- 102018 128 169
- DE-A1- 4 141 310
- DE-U1- 202004 000 031
- DE-U1- 202019 104 502
- ES-T3- 2 550 498
- JP-A- 2001 141 155
- RU-C1- 2 721 497

## Beschreibung

Die vorliegende Erfindung betrifft eine Rohrverbindung zwischen einem Rohrende eines Kunststoffrohrs, eines Kunststoff-Verbundrohrs oder eines Metall-Kunststoff-Verbundrohrs und einem Verbindungselement, wobei die Rohrverbindung ein Verbindungselement, das mindestens einen mit mehreren umlaufenden Außenrippen versehenen Stützkörper zum Aufschieben des Rohrendes umfasst, der mit einem Anschlagelement verbunden ist, das eine Rohranschlagfläche umfasst; ein Kunststoffrohr, ein Kunststoff-Verbundrohr oder ein Metall-Kunststoff-Verbundrohr, in dessen eines Rohrende der Stützkörper des Verbindungselements eingesetzt ist; und mindestens eine Fixierhülse, die einen Abschnitt des Rohrendes gegen den Stützkörper zur Fixierung des Rohrende des Verbindungelements auf dem Stützkörper fixiert, umfasst.

Derartige Rohrverbindungen und Verbindungselemente zur Herstellung derartiger Rohrverbindungen sind aus dem Stand der Technik bekannt. Beispielsweise beschreibt die DE 101 30 003 A1 eine derartige Rohrverbindung, in der das Verbindungselement einen umlaufenden Kragen mit einer Anschlagsfläche für das Rohr sowie eine Innenhülse und eine Außenhülse aufweist. Nachteilig an der in der DE 101 30 003 A1 beschriebenen Rohrverbindung und dem darin enthaltenen Verbindungselement wird gesehen, dass sich bei einem schrägen Abschneiden des Rohrendes die Endposition des Rohres nicht ändert, die Endposition der Innenhülse und der Außenhülse jedoch weiter an der Anschlagfläche am umlaufenden Kragen liegt. Dadurch verringert sich die Überdeckung zwischen dem Rohrende und dem Dichtbereich, was zu Leckagen führen kann. Eine Rohrverbindung mit den Merkmalen des Oberbegriffs des Anspruchs 1 ist aus der JP 2001 114155 A1 bekannt.

Vor diesem Hintergrund liegt die Aufgabe der vorliegenden Erfindung in der Bereitstellung einer Rohrverbindung, die die Nachteile des Stands der Technik überwindet. Insbesondere soll die erfindungsgemäße Rohrverbindung auch bei einem schräg abgeschnittenen Rohrende eine unveränderte Dichtheit der erfindungsgemäßen Rohrverbindung gewährleisten.

Diese und andere Aufgaben werden gemäß der vorliegenden Erfindung durch eine Rohrverbindung mit den Merkmalen des Anspruchs 1 gelöst. Bevorzugte Ausführungsformen der erfindungsgemäßen Rohrverbindung sind in den abhängigen Ansprüchen beschrieben.

Gemäß der vorliegenden Erfindung wurde erkannt, dass eine solche unveränderte Dichtheit der Rohrverbindung auch bei einem schrägen Ablängen des Rohrendes dann erzielt werden kann, wenn die dem Dichtbereich der Rohrverbindung zur Verfügung stehende Länge der Rohrinnenwand unabhängig von der Schräge des Rohrendes ist. Erfindungsgemäß wird dies dadurch realisiert, dass das Anschlagelement einen Bereich aufweist, der nicht zum Stützkörper gehört und der in axialer Richtung in Richtung eines offenen Endes des Stützkörpers über die Rohranschlagfläche hinausragt. Dadurch wird ein zusätzlicher Hohlraum zur Aufnahme des ggf. schräg abgelängten Rohrendes gebildet, sodass sich diese Schräge nicht auf den Dichtbereich der erfindungsgemäßen Rohrverbindung auswirkt.

Dementsprechend liegt die vorliegende Erfindung in der Bereitstellung einer Rohrverbindung zwischen einem Rohrende eines Kunststoffrohrs, eines Kunststoff-Verbundrohrs oder eines Metall-Kunststoff-Verbundrohrs und einem Verbindungselement, wobei die Rohrverbindung ein Verbindungselement, das mindestens einen mit mehreren umlaufenden Außenrippen versehenen Stützkörper zum Aufschieben des Rohrendes umfasst, der mit einem Anschlagelement verbunden ist, das eine Rohranschlagfläche umfasst; ein Kunststoffrohr, ein Kunststoff-Verbundrohr oder ein Metall-Kunststoff-Verbundrohr, in dessen eines Rohrende der Stützkörper des Verbindungselements eingesetzt ist; und mindestens eine Fixierhülse, die einen Abschnitt des Rohrendes gegen den Stützkörper zur Fixierung des Rohrende des Verbindungelements auf dem Stützkörper fixiert, umfasst, wobei das Anschlagelement mindestens einen vom Stützkörper des Verbindungselements beabstandeten, überstehenden Bereich aufweist, der in axialer Richtung in Richtung des offenen Endes des Stützkörpers über die Rohranschlagfläche hinausragt und der die Position der Fixierhülse oder eines Bestandteils der Fixierhülse in axialer Richtung begrenzt und die Fixierhülse mehrteilig zumindest aus einer Quetschhülse, die am Rohrende anliegt, und einer Außenhülse, die die Quetschhülse gegen das Rohrende presst, aufgebaut ist, wobei sich die Rohrverbindung erfindungsgemäß dadurch auszeichnet, dass, die Fixierhülse, insbesondere die Außenhülse, als Schiebehülse zum axialen Aufschieben ausgebildet ist, und das Anschlagelement (6) als separates Bauteil ausgebildet ist.

Wie hierin verwendet bedeutet der Begriff "Konfektionierung des Verbindungselements mit einer Fixierhülse" die vorherige Befestigung oder Vormontage der Fixierhülse an dem Verbindungselement, so dass der Handwerker an der Baustelle nur ein Bauteil in die Hand zu nehmen braucht.

In Bezug auf die erfindungsgemäße Rohrverbindung kann es von Nutzen sein, wenn zwischen dem Stützkörper, der Rohranschlagfläche und im überstehenden Bereich ein zum offenen Ende des Stützkörpers einseitig offener, zusätzlicher Rohraufnahmeraum ausgebildet ist. Durch diesen zusätzlichen Rohraufnahmeraum kann das schräge Ablängen des Rohrendes kompensiert werden, sodass die Dichtheit der erfindungsgemäßen Rohrverbindung weitgehend unabhängig von dem Winkel, in dem das Rohrende entweder aufgrund einer Rohrschere, die ein ungeeignetes Schnittbild am Rohrende erzeugt und/oder aufgrund eines schrägen Ansetzens der Rohrschere abgelängt wurde, gewährleistet ist.

Darüber hinaus kann es von Vorteil sein, wenn die Rohranschlagfläche und/oder der überstehende Bereich zumindest teilweise an dem Anschlagelement angeordnet ist/sind. Dadurch kann die gewinkelte Bauform in dem Anschlagelement realisiert werden, was die Herstellung eines erfindungsgemäßen Verbindungselements einfacher und kostengünstiger macht.

Es kann auch günstig sein, wenn das Verbindungselement eine Eingriffsnut aufweist und das Anschlagelement mindestens ein verbindungselementseitiges Eingriffselement aufweist, das in die Eingriffsnut des Verbindungselements eingreift. Das verbindungselementseitige Eingriffselement des Anschlagelements kann sich in der Eingriffsnut auch beim Verpressvorgang ungehindert bewegen. Aufgrund der runden Form von Verbindungselement und Anschlagelement reicht bereits eine geringe Eindringtiefe des verbindungselementseitigen Eingriffselements in die Eingriffsnut aus, wodurch eine einfache Konfektionierung des Anschlagelements am Verbindungselement gewährleistet ist. Diesbezüglich kann es auch günstig sein, wenn die Eingriffsnut in einer Erhöhung, insbesondere einem umlaufenden Kragen, am Verbindungselement ausgebildet ist, die den axialen Abschluss des Stützkörpers bildet. So lässt sich die Eingriffsnut in einfacher Weise in das Verbindungselement integrieren. In diesem Zusammenhang kann es von besonderem Nutzen sein, wenn das verbindungselementseitige Eingriffselement als eine Mehrzahl von entlang eines Innenumfangs des Anschlagelements angeordneter Einzelelemente ausgebildet ist. Diese einzelnen Elemente sind vorzugsweise als Einzelfederelemente ausgebildet. Dadurch greift das verbindungseitige Eingriffselement federnd am Verbindungselement ein, was der Verbindung eine gewisse Flexibilität verleiht.

Es kann sich auch als günstig erweisen, wenn das Anschlagelement ein fixierhülsenseitiges Eingriffselement aufweist, das mit einer kooperierenden Aufnahme der Fixierhhülse in Eingriff befindlich ist. Dadurch ist die Fixierhülse, wenn das erfindungsgemäße Verbindungselement mit der Fixierhülse vorkonfektioniert ist, relativ beweglich über das Anschlagelement mit dem Verbindungselement verbunden. Dies trägt entscheidend zur leichten Einführbarkeit des Rohrendes auch bei einer starken Exzentrizität des Rohrendes bei, wodurch die Montage der Rohrverbindung erheblich erleichtert wird.

Es kann auch bevorzugt sein, wenn die fixierte Hülse zumindest teilweise durch das Anschlagelement mit dem Verbindungselement verbunden ist. Auf diese Weise ist die Fixierhülse am Verbindungselement vorkonfektioniert, sodass der Verarbeiter an der Baustelle nur ein Bauteil in die Hand genommen werden muss.

Erfindungsgemäß ist die fixierte Hülse mehrteilig zumindest aus einer Quetschhülse, die am Rohrende anliegt, und einer Außenhülse, die die Quetschhülse gegen das Rohrende presst, aufgebaut. Die Außenhülse dient zur Fixierung der Quetschhülse auf dem Stützkörper des Verbindungselements. Dazu fixiert die Außenhülse die Quetschhülse auf dem Rohrende, die wiederum das Rohrende in die umlaufenden Außenrippen des Stützkörpers drückt. Dadurch wird die Dichtheit der erfindungsgemäßen Rohrverbindung weiter verbessert.

Erfindungsgemäß ist die fixierte Hülse, insbesondere die Außenhülse, als Schiebehülse zum axialen Aufschieben ausgebildet.

Es kann auch von besonderem Vorteil sein, wenn die Quetschhülse aus einem elastisch verformbaren polymeren Material ausgebildet ist. Dadurch wird die Stabilität der erfindungsgemäßen Rohrverbindung weiter erhöht.

Die voranstehend in Bezug auf die erfindungsgemäße Rohrverbindung beschriebenen Merkmale und Vorteile gelten entsprechend auch für das in der erfindungsgemäßen Rohrverbindung enthaltene Verbindungselement.

Es versteht sich, dass beim Vorhandensein mehrerer Stützkörper an einem Verbindungselement jedem Stützkörper des Verbindungselements eine Fixierhülse zugeordnet werden kann, die in bevorzugten Ausführungsformen der vorliegenden Erfindung über ein Anschlagelement mit dem Verbindungselement mittelbar verbunden ist. In bevorzugten Ausführungsformen der vorliegenden Erfindung ist jeder Stützkörper des Verbindungselements erfindungsgemäß mit einer Fixierhülse über ein Anschlagelement verbunden.

Hinsichtlich der erfindungsgemäßen Rohrverbindung kann es von Nutzen sein, wenn das Anschlagelement in der fertigen Rohrverbindung nicht mit der Quetschhülse und/oder der Außenhülse in Kontakt steht. Dadurch kann ein beliebiges Material für das Anschlagelement zum Einsatz kommen, insbesondere ein Material, das während des Einsatzes der erfindungsgemäßen Rohrverbindung beim Kontakt zur Quetschhülse und/oder zur Außenhülse eine chemische Reaktion eingeht. Die Kontaktfreiheit zwischen der Außenhülse und dem Anschlagelement wird in bevorzugten Ausführungsformen der erfindungsgemäßen Rohrverbindung dadurch begünstigt, dass die dem Stützkörper abgewandte Seite des fixierhülsenseitigen Eingriffselements zumindest abschnittweise im Wesentlichen parallel zu einer Einführungsschräge der Außenhülse verläuft.

Erfindungsgemäß ist die Außenhülse als Schiebehülse zum axialen Aufschieben auf die Quetschhülse ausgebildet. Die resultierende Schiebhülsenverbindung hat eine hohe Dichtheit und verfügt über eine hohe Verbindungssicherheit. Das Aufschieben der Schiebehülse auf die Quetschhülse führt zu einer Aufweitung der Schiebehülse, wodurch diese eine radial nach innen gerichtete Kraft auf die Quetschhhülse bzw. Innenhülse ausübt. Diese Kraft wird auf das Rohr übertragen, das gegen den mit umlaufenden Außenrippen versehenen Stützkörper drückt, wodurch eine dauerhaft dichte Verbindung zwischen dem Rohr und dem e Verbindungselement ausgebildet wird. Bevorzugt umfasst die Quetschhülse mindestens einen zylindrischen Abschnitt. Der zylindrische Abschnitt führt zu einer reduzierten Neigung der Quetschhülse zu einer axialen Relativbewegung (beispielsweise aufgrund einer Temperaturwechselbeanspruchung). Dieser mindestens eine zylindrische Abschnitt erstreckt sich bevorzugt insgesamt über einen Großteil ihrer Länge, vorzugsweise über mindestens 60 % der Länge der Quetschhülse, besonders bevorzugt über mindestens 75 % der Länge der Quetschhülse. Alternativ oder zusätzlich dazu kann die Quetschhülse eine axiale Schlitzung und/oder eine Konturierung umfassen, durch die Ringsteifigkeit der Quetschhülse reduziert und das Aufschieben der Schiebehülse auf die Quetschhülse erleichtert wird sowie auch die Kraftübertragung von der Schiebehülse auf das Rohrende verbessert wird. An ihrer Innenoberfläche kann die Quetschhülse eine innenseitige Oberflächenstruktur oder -kontur aufweisen, welche dazu geeignet ist, eine mögliche axiale Relativbewegung der Außenhülse auf dem Rohr, z. B. durch Temperaturwechselbeanspruchung, zu verhindern. Ebenso kann die Außenoberfläche der Quetschhülse eine Oberflächenstruktur oder -kontur aufweisen, welche dazu geeignet ist, eine mögliche axiale Relativbewegung der Außenhülse, z. B. durch Temperaturwechselbeanspruchung, zu verhindern. Alternativ oder zusätzlich dazu kann die Außenoberfläche der Quetschhülse eine Oberflächenstruktur oder Oberflächenkontur aufweisen, die sich dazu eignet, die Aufschiebbarkeit der Außenhülse zu verbessern (z. B. Reduzierung der Verpresskraft, Reduzierung von Geräuschen während der Verbindungsherstellung). Um diese Oberflächeneigenschaften zu erzielen, kann die Innenoberfläche der Außenhülse und/oder die Außenoberfläche der Quetschhülse einen Mittenrauwert Rₐ in einem Bereich von 1 µm bis zur Hälfte der mittleren Wandstärke der Außenhülse und/oder eine gemittelte Rautiefe R_{z} in einem Bereich von 5 µm bis zur Hälfte der mittleren Wandstärke der Außenhülse aufweisen und/oder eine Mehrzahl von makroskopischen Unebenheiten aufweisen, deren Tiefe die Hälfte der mittleren Wandstärke der Außenhülse nicht übersteigen sollte. Dabei bedeutet der der Begriff "Mittenrauwert" oder "mittlere Rauheit" (dargestellt durch das Symbol "Rₐ") einer Oberfläche wie hierin verwendet das arithmetische Mittel der betragsmäßigen Abweichungen aller Messpunkte auf der Oberfläche von der Mittellinie der Oberfläche und der der Begriff "gemittelte Rautiefe" (dargestellt durch das Symbol "R_{z}") einer Oberfläche bedeutet wie hierin verwendet die Rautiefe gemäß DIN EN ISO 4287/4288. Hinsichtlich der Oberflächeneigenschaften der Innenoberfläche und der Außenoberfläche der Quetschhülse sowie der Innenoberfläche der Außenhülse soll auf die DE 10 2015 122 345 A1 verwiesen werden, auf die hiermit explizit Bezug genommen wird. Ebenso kann die Quetschhülse an ihrer Außenseite beispielsweise mindestens eine Rippe, insbesondere in Dreiecks- oder Rechtecksform umfassen. Zusätzlich dazu kann die Außenoberfläche der Quetschhülse mit einer Beschichtung versehen sein, um die Aufschiebbarkeit der Schiebehülse zu verbessern (z. B. Reduzierung der Verpresskraft, Reduzierung von Geräuschen während der Verbindungsherstellung).

Ebenso kann es von Nutzen sein, wenn das Rohrende einen im Vergleich zum regulären Innendurchmesser (d.h. dem Innendurchmesser, den das Rohr nach der Extrusion im Wesentlichen über dessen gesamte Rohrlänge besitzt) im Wesentlichen identischen Innendurchmesser besitzt oder einen gegenüber dem regulären Innendurchmesser erweiterten Innendurchmesser besitzt. Bevorzugt ist es jedoch, wenn das Rohrende einen im Vergleich zum regulären Innendurchmesser des Rohres im Wesentlichen identischen Durchmesser besitzt. Wie hierin verwendet bedeutet der Begriff "ein im Vergleich zum regulären Innendurchmesser im Wesentlichen identischen Innendurchmesser", dass der Innendurchmesser des Rohrendes nicht durch einen separaten Aufweitvorgang unter Verwendung eines sogenannten Aufweitwerkzeugs erweitert wurde. Dabei kann es sehr wohl sein, dass der Innendurchmesser des Rohrendes durch das Einschieben des Stützkörpers des Verbindungselements geringfügig, beispielsweise um bis zu etwa 5 %, gegenüber dem regulären Innendurchmesser erhöht ist oder das Rohrende in der erfindungsgemäßen Rohrverbindung durch die Einwirkung der axial aufgeschobenen Schiebehülse zusammengestaucht ist, so dass der Innendurchmesser des Rohrendes geringfügig, beispielsweise um bis zu etwa 10 %, gegenüber dem regulären Innendurchmesser reduziert ist. Im Falle einer erfindungsgemäßen Rohrverbindung, bei der das Rohrende einen im Vergleich zum regulären Innendurchmesser im Wesentlichen identischen Innendurchmesser besitzt, ist das Verfahren zu deren Erzeugung stark vereinfacht, weil der Schritt des Aufweitens des Rohrendes entfällt. Weist das Rohrende einen gegenüber dem regulären Innendurchmesser erweiterten Innendurchmesser auf, verfügt die erfindungsgemäße Rohrverbindung wegen des Memory-Gedächtnisses des Rohrmaterials über eine verbesserte Dichtheit und Verbindungssicherheit.

Gemäß der vorliegenden Erfindung kommen als bevorzugte Materialien für das Verbindungselement polymere Werkstoffe wie beispielsweise Polypropylen und glasfaserverstärktes Polypropylen, Polyamide und glasfaserverstärkte Polyamide, temperaturbeständige Thermoplaste wie Polyphenylsulfon (PPSU), Polyvinylidenfluorid (PVDF), Polyethersulfon (PES), Polysulfon (PSU), Polyphenylensulfid (PPS), Acrylnitril-Butadien-Styrol-Copolymerisat (ABS), Polyoxymethylen (POM) und Polyestercarbonat (PESC) sowie Copolymere und Blends dieser Polymere, wobei diese Polymermaterialien auch faserverstärkt, insbesondere glasfaserverstärkt zum Einsatz kommen können, sowie metallische Werkstoffe wie beispielsweise Messing, insbesondere Ecobrass^{®}, Rotguss und Edelstahl zum Einsatz. Temperaturbeständige Thermoplaste wie insbesondere Polyphenylsulfon und Polyvinylidenfluorid sind zur Herstellung des Verbindungselements besonders bevorzugt. Der Begriff "temperaturbeständige Thermoplaste", wie er hierin verwendet wird, bezieht sich auf die Wärmeformbeständigkeit und Thermostabilität dieser Werkstoffgruppe und bezeichnet thermoplastische Polymermaterialien mit einer Wärmeformbeständigkeit bei Temperaturen von mindestens von 150°C. Die Obergrenze der Temperatur, bei der ein derartiger temperaturbeständiger Kunststoff einsetzbar ist, ist vom verwendeten Material abhängig, wobei die Einsetzbarkeit derartiger Polymermaterialien bei maximal 260°C endet.

Gemäß der vorliegenden Erfindung kommen als Kunststoffrohre Vollkunststoffrohre, bevorzugt aus Polyethylen (PE, insbesondere PE 100 und PE-RT (Polyethylen mit erhöhter Temperaturbeständigkeit)), vernetztem Polyethylen (PE-X, insbesondere PE-Xa, PE-Xb und PE-Xc), Polypropylen (insbesondere statistischem Polypropylen PP-R) und Polybutylen (PB); sowie Kunststoff-Verbundrohre, bevorzugt mit Schichten aus Polyethylen (PE, insbesondere PE 100 und PE-RT), vernetztem Polyethylen (PE-X, insbesondere PE-Xa, PE-Xb und PE-Xc), Polypropylen (insbesondere statistischem Polypropylen PP-R), und/oder Polybutylen (PB) sowie Metall-Kunststoff-Verbundrohre (MKV-Rohre) zum Einsatz. Als Sauerstoffsperrschicht kann zusätzlich eine Schicht aus Ethylen-Vinylalkohol-Copolymer (EVOH) vorhanden sein. Metall-Kunststoff-Verbundrohre (MKV-Rohre) umfassen gemäß der vorliegenden Erfindung bevorzugt Schichten aus Polyethylen (PE, insbesondere PE 100 und PE-RT), vernetztem Polyethylen (PE-X, insbesondere PE-Xa, PE-Xb und PE-Xc), Polypropylen (insbesondere statistischem Polypropylen PP-R) und/oder Polybutylen (PB) und mindestens eine Schicht aus Metallen, vorzugsweise Aluminium. Die Metallschicht ist vorzugsweise stumpfgeschweißt. Bei Kunststoff-Verbundrohren und MKV-Rohren können zwischen einzelnen Schichten Haftvermittlerschichten eingebracht sein. Gemäß der vorliegenden Erfindung können alle Rohre einer erfindungsgemäßen Rohrverbindung identisch aufgebaut sein oder eines oder mehrere der Rohre können unterschiedliche Rohraufbauten aufweisen. Darüber hinaus können die Rohre gemäß der vorliegenden Erfindung auch faserverstärkt sein. Die Faserverstärkung der Leitungsrohre kann in einzelnen oder in allen Rohren, über die gesamte Rohrlänge oder auch nur in Abschnitten, vorhanden sein. Hinsichtlich des Kunststoffrohres oder des Metall-Kunststoff-Verbundrohres der erfindungsgemäßen Rohrverbindung ist es besonders bevorzugt, dass mindestens eine Schicht des jeweiligen Rohres vernetztes Polyethylen (insbesondere PE-Xa, PE-Xb und PE-Xc) umfasst. Der Werkstoff "vernetztes Polyethylen" ist ein Werkstoff, der über ein Formgedächtnis bzw. einen sog. "Memory-Effekt" verfügt. Dieser Memory-Effekt liegt darin, dass das vernetzte Polyethylen nach einer Veränderung seiner äußeren Geometrie versucht, wieder in seine ursprüngliche Form zurückzukehren. Beim Aufweiten von Rohren führt dies dazu, dass ein PE-X-umfassendes Rohr nach dem Aufweiten wieder versucht, den Rohrinnendurchmesser vor dem Aufweiten zu erreichen. Da nach dem Aufweiten ein Stützkörper eines Verbindungselements in das aufgeweitete Rohrende eingesetzt wird, führt der Memory-Effekt beim Einsatz eines Rohres, das zumindest eine Schicht mit vernetztem Polyethylen umfasst, zu einer besonders hohen Dichtheit der erfindungsgemäßen Rohrverbindung.

Bei dem Verbindungselement kann es sich um ein Gewindeformteil oder um ein gewindeloses Formteil, also um ein Verbindungselement, das kein Gewinde aufweist, handeln. Dies beinhaltet insbesondere Anschlussstücke, Anschlusswinkel, Mehrfachverteiler, T-Stücke, Wand-T-Stücke, Wandwinkel, Systemübergänge, Übergangsstücke, gewinkelte Übergangsstücke, die jeweils kein Gewinde aufweisen. Dementsprechend bezieht sich der Begriff "Gewindeformteil" auf ein Verbindungselement, das mindestens ein Gewindeformteil besitzt. Dies beinhaltet insbesondere Anschlusstücke, Anschlusswinkel, Mehrfachverteiler, T-Stücke, Wand-T-Stücke, Wandwinkel, Systemübergänge, Übergangsstücke und gewinkelte Übergangsstücke, die jeweils mindestens ein Innen- und/oder Außengewinde aufweisen.

Erfindungsgemäß eignen sich als Materialien für die Außenhülse und/oder die Quetschhülse und/oder ggf. das Anschlagelement vorzugsweise diejenigen Materialien, die in Bezug auf das Verbindungselement der erfindungsgemäßen Rohrverbindung genannt sind. Temperaturbeständige Kunststoffe und insbesondere Polyphenylsulfon, Polyvinylidenfluorid, Polypropylen, Polyamide und Polyoxymethylen sind als Materialien für die Außenhülse und/oder die Quetschhülse besonders bevorzugt. Vernetztes Polyethylen (insbesondere PE-Xa, PE-Xb und PE-Xc) ist als Material für die Außenhülse und/oder die Quetschhülse ebenfalls besonders bevorzugt.

Besonders bevorzugt ist es, wenn das Material des Verbindungselements eine höhere Steifigkeit als die Materialien der Quetschhülse, der Außenhülse und des Rohrs besitzt. Weiter ist es bevorzugt, wenn das Material der Quetschhülse eine höhere Steifigkeit als die Materialien der Außenhülse und des Rohrs besitzt. Ebenso ist es bevorzugt, wenn das Material der Außenhülse eine höhere Steifigkeit als das Material des Rohrs besitzt.

Die erfindungsgemäße Rohrverbindung gemäß der vorliegenden Erfindung wird insbesondere in Leitungs- und Anschlusssystemen in der Trinkwasserinstallation, in Sprinkleranlagen, in Heizkörperanbindungen, in Betonkerntemperierungen sowie in Flächenheizungs- und/oder Flächenkühlungssystemen eingesetzt.

Die erfindungsgemäße Rohrverbindung sowie einzelne Teile davon können auch zeilenweise oder schichtweise unter Verwendung eines zeilenaufbauenden oder schichtaufbauenden Fertigungsverfahrens (z. B. 3D-Druck) hergestellt werden. Bevorzugt ist es jedoch, wenn das Rohr mittels Extrusion hergestellt wird. Ebenso ist es bevorzugt, wenn das Verbindungselement, die Rohrhülse und/oder die Quetschhülse mittels Spritzguss hergestellt werden.

Im Folgenden soll die Erfindung unter Bezugnahme auf die in den Figuren dargestellten Ausführungsformen im Detail erläutert werden. Dabei zeigt:
Fig. 1 eine partielle Querschnittsdarstellung einer Rohrverbindung gemäß einer Ausführungsform der vorliegenden Erfindung bei einem gerade abgelängten Rohrende;
Fig. 2 eine partielle Querschnittsdarstellung der in gemäß Fig. 1 dargestellten Ausführungsform der erfindungsgemäßen Rohrverbindung bei einem schräg abgelängten Rohrende;
Fig. 3 eine partielle Querschnittsdarstellung einer Rohrverbindung (nicht erfindungsgemäß) bei einem schräg abgelängten Rohrende; und
Fig. 4 eine partielle Querschnittsdarstellung einer Rohrverbindung (nicht erfindungsgemäß) bei einem schräg abgelängten Rohrende.

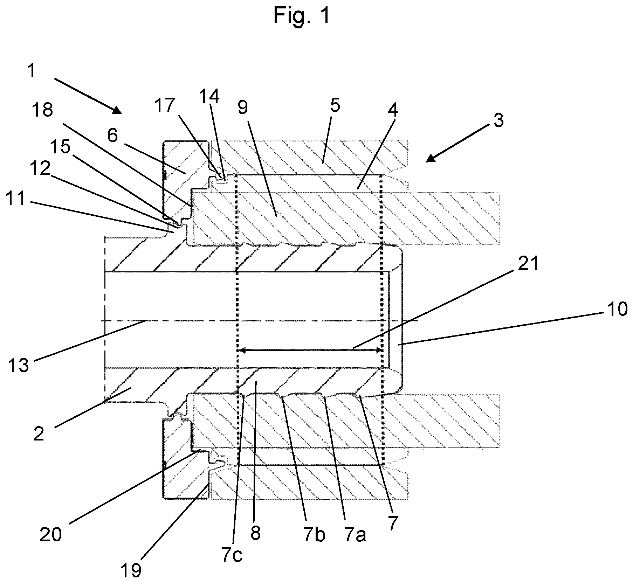

In Fig. 1 ist eine Ausführungsform einer erfindungsgemäßen Rohrverbindung 1 in einer partiellen Querschnittsdarstellung gezeigt. In der in Fig. 1 dargestellten Ausführungsform umfasst die erfindungsgemäße Rohrverbindung 1 ein Verbindungselement 2, eine Fixierhülse 3, die in der in Fig. 1 dargestellten Ausführungsform zweiteilig aus einer Quetschhülse 4 und einer Außenhülse 5, ein Anschlagelement 6 sowie ein Rohrende 9. Das Anschlagelement 6 ist vor der Erzeugung der erfindungsgemäßen Rohrverbindung 1 sowohl mit dem Verbindungselement 2 als auch mit der Quetschhülse 4 in Eingriff befindlich. Dadurch ist die Quetschhülse 4 auf dem Verbindungselement 2 über das Anschlagelement 6 vorkonfektioniert.

Das Verbindungselement 2 umfasst einen mit umlaufenden Außenrippen 7, 7a, 7b, 7c versehenen Stützkörper 8 zum Einführen in ein Rohrende 9. An der dem offenen Ende 10 des Stützkörpers 8 gegenüberliegenden Seite weist der Stützkörper 8 eine Erhöhung 11 auf, in der eine Eingriffsnut 12 angeordnet ist. Dabei bildet die Erhöhung 11 den axialen Abschluss des Stützkörpers 8 des Verbindungselements 2. In der in Fig. 1 dargestellten Ausführungsform ist die Erhöhung 11 nicht hoch genug ausgebildet, damit sie als Verpresskragen zum Anlegen eines Presswerkzeugs bzw. Schiebewerkzeugs zur Erzeugung der erfindungsgemäßen Rohrverbindung fungieren könnte. In dieser Ausführungsform stellt die Erhöhung 11 also keinen umlaufenden Verpresskragen dar. In alternativen Ausführungsformen der vorliegenden Erfindung kann diese Erhöhung 11 aber in einer geeigneten Höhe und einer geeigneten Materialstärke ausgebildet sein, damit daran bei der Herstellung einer erfindungsgemäßen Rohrverbindung 1 das Verpresswerkzeug angreifen kann.

Die umlaufenden Außenrippen 7, 7a, 7b, 7c sind in der in Fig. 1 dargestellten Ausführungsform der vorliegenden Erfindung sägezahnförmig ausgebildet sind. Dabei ist der Winkel, in dem die dem offenen Ende 10 des Stützkörpers 8 nächste umlaufende Außenrippe 7 gegen eine zentrale Achse 13 des Stützkörpers 8 geneigt ist, kleiner als der Winkel, in dem die dieser Außenrippe 7 benachbarte umlaufende Außenrippe 7a gegen die zentrale Achse 13 geneigt ist. Der Neigungswinkel nimmt von der Außenrippe 7 zur umlaufenden Außenrippe 7c vom offenen Ende 10 des Stützkörpers 8 ausgehend stetig zu. Dadurch kann die beispielsweise durch das Ablängen des Rohrs auftretende Exzentrizität des Rohrendes 9 durch die umlaufenden Außenrippen 7, 7a, 7b, 7c mit verschieden großen Neigungswinkeln beim Aufschieben auf den Stützkörper 8 des Verbindungselements 2 reduziert werden, was das Einstecken des Stützkörpers 8 in das Rohrende 9 erleichtert.

In der in Fig. 1 dargestellten Ausführungsform handelt es sich bei dem Verbindungselement 2 um ein Bauteil aus Messing, insbesondere entzinkungsbeständigem Messing. In alternativen Ausführungsformen des Verbindungselements 2 können auch andere metallische Werkstoffe wie Ecobrass^{®}, Rotguss (besonders bevorzugt der in der WO 2017/167441 A2 beschriebene Rotguss) und Edelstahl, oder Kunststoffmaterialien wie beispielsweise Polypropylen, glasfaserverstärktes Polypropylen, Polyamide, glasfaserverstärkte Polyamide, Polyvinylidenfluorid (PVDF), Polyethersulfon (PES), Polyphenylsulfon (PPSU), Polysulfon (PSU), Polyphenylensulfid (PPS), Acrylnitril-Butadien-Styrol-Copolymerisat (ABS) und Polyestercarbonat (PESC) sowie Copolymere und Blends dieser Polymere, wobei diese Polymermaterialien auch faserverstärkt, insbesondere glasfaserverstärkt zum Einsatz kommen können, eingesetzt werden. Im Falle metallischer Materialien kommen Gießverfahren, wie zum Beispiel Sandguss und Kokillenguss, Schmiedeverfahren, wie zum Beispiel Warmschmieden, sowie Drehverfahren zum Einsatz.

Die Quetschhülse 4 besitzt eine im Wesentlichen hohlzylindrische Form auf. An ihrer Außenoberfläche (der dem Stützkörper 8 des Verbindungselements 2 abgewandte Oberfläche) ist eine Aufnahme 14 ausgebildet. Diese Aufnahme 14 befindet sich in der in Fig. 1 dargestellten Ausführungsform an dem dem offenen Ende 10 des Stützkörpers 8 abgewandten Ende der Quetschhülse 4. In alternativen Ausführungsformen kann die Aufnahme 14 auch in Richtung der Mitte der Quetschhülse 4 in axialer Richtung verschoben angeordnet sein. Weiter weist die Quetschhülse 4 eine als Schräge ausgebildete Einsteckhilfe auf. Insgesamt ist die Quetschhülse 4 in der gezeigten Ausführungsform als Spritzgussteil aus PVDF ausgebildet. In axialer Richtung kann die Quetschhülse 4 Längsschlitze aufweisen, die zur vorformuliert der Quetschhülse 4 in radialer Richtung beitragen.

Die Verbindung zwischen dem Verbindungselement 2 und der Quetschhülse 3 erfolgt über das als separates Bauteil ausgebildete Anschlagelement 6. In der in Fig. 1 dargestellten Ausführungsform handelt es sich um ein durch Spritzguss hergestelltes, ringförmiges Bauteil aus Polyoxymethylen (POM). An seiner dem Verbindungselement 2 zugewandten Seite weist das Anschlagelement 6 ein verbindungselementseitiges Eingriffselement 15 auf, das in der in Fig. 1 dargestellten Ausführungsform radial nach innen in Richtung des Verbindungselements 2 weist. In dieser Ausführungsform ist das verbindungselementseitige Eingriffselement 15 als Eingriffsnase ausgebildet. In der in Fig. 1 dargestellten Ausführungsform der vorliegenden Erfindung ist das verbindungselementseitige Eingriffselement 15 umlaufend ausgebildet. Alternativ dazu ist es auch denkbar, dass es sich um mehrere verbindungselementseitige Eingriffselemente 15 handelt, die um den Innenumfang des Anschlagelements 6 verteilt, insbesondere gleichmäßig über den InnenuUmfang verteilt, angeordnet sind. In diesem Zusammenhang kann es von besonderem Nutzen sein, wenn das verbindungselementseitige Eingriffselement als eine Mehrzahl von entlang eines Innenumfangs des Anschlagelements 6 angeordneter Einzelelemente ausgebildet ist. Diese einzelnen Elemente sind vorzugsweise als Einzelfederelemente ausgebildet. Dadurch greift das verbindungseitige Eingriffselement 15 federnd am Verbindungselement ein, was der Verbindung eine gewisse Flexibilität verleiht.

Das verbindungselementseitige Eingriffselement 15 greift in die Eingriffsnut 12 am Stützkörper 8 des Verbindungselement 2 ein. Dabei ist die Materialstärke des verbindungselementseitigen Eingriffselements 15 dabei etwas geringer als der Abstand zwischen den Nutstegen der Eingriffsnut 12. So kann das verbindungselementseitige Eingriffselement 15 der Quetschhülse 4 in die Eingriffsnut 12 des Verbindungselements 2 eingreifen und ist dort in radialer Richtung beweglich geführt. Aufgrund der runden Form der Verbindung zwischen dem Verbindungselement 2 und dem Anschlagelement 6 reicht bereits eine geringe Eindringtiefe des verbindungselementseitigen Eingriffselements 15 in die Eingriffsnut 12 aus, wodurch eine einfache Konfektionierung gewährleistet ist. Darüber hinaus lässt sich die Quetschhülse 4 senkrecht zur Mittelachse des Verbindungselements 2 bewegen. Dies erleichtert die Einsteckbarkeit des Rohrendes 7, da eine eventuell vorhandene Exzentrizität des Rohres ausgeglichen werden kann. Weiter wird durch die Beweglichkeit des verbindungselementseitigen Eingriffselements 15 in der Eingriffsnut 12 eine im verpressten Zustand der erfindungsgemäßen Rohrverbindung 1 sowie durch die später zu beschreibende Verbindung des Anschlagelements 6 mit der Quetschhülse 4 eine gleichmäßige radiale Verformung der Quetschhülse 4 über die gesamte Längsachse gewährleistet. Dies bewirkt neben einer verbesserten Abdichtung über die gesamte Stützkörperlänge auch, dass sich Quetschhülse 4 und die Außenhülse 5 in einem Gleichgewichtszustand befinden, wodurch eine axiale Relativbewegung der Außenhülse 5 verhindert wird.

In Richtung der Quetschhülse 4 weist das Anschlagelement 6 ein quetschhülsenseitiges Eingriffselement 17 auf. In der in Fig. 1 dargestellten Ausführungsform ist das quetschhülsenseitige Eingriffselement 17 als umlaufendes Rastelement ausgebildet. In alternativen Ausführungsformen kann das quetschhülsenseitige Eingriffselement 17 auch mehrteilig ausgebildet sein, wobei die einzelnen Elemente umlaufend, insbesondere gleichmäßig umlaufend, um den Umfang des Anschlagelements 6 angeordnet sind. Das quetschhülsenseitige Eingriffselement 17 befindet sich im Eingriff mit der Aufnahme 14 der Quetschhülse 4. In der in Fig. 1 dargestellten Ausführungsform der vorliegenden Erfindung ist das als umlaufende Rastelement ausgebildete quetschhülsenseitige Eingriffselement 17 vor der Erzeugung der erfindungsgemäßen Rohrverbindung 1 mit der Aufnahme 14 der Quetschhülse 4 verrastet. Dabei steht das quetschhülsenseitige Eingriffselement 17 in direktem Kontakt mit der Quetschhülse 4. Auf diese Weise ist das Verbindungselement 2 mit der Quetschhülse 4 über das Anschlagelement 6 konfektioniert und kann als ein gemeinsames Bauteil an die Baustelle geliefert werden.

Zur Fixierung des Rohrendes 9 auf dem Stützkörper 8 wird die Außenhülse 5 eingesetzt, die in der dargestellten Ausführungsform als Schiebehülse ausgebildet. Gemäß der in Fig. 1 gezeigten Ausführungsform ist die Außenhülse 5 eine Hülse aus Polyvinylidenfluorid (PVDF), die im Wesentlichen über ihre gesamte Länge einen gleichbleibenden Querschnitt aufweist und lediglich an beiden Enden jeweils eine Einführungsschräge aufweist. Alternativ können auch Außenhülsen 5 aus anderen Materialien, insbesondere vorteilhafterweise aus vernetztem Polyethylen (insbesondere PE-Xa, PE-Xb oder PE-Xc), verwendet werden. In dieser Ausführungsform weist die Außenhülse 5 eine Innenoberfläche mit einem Mittenrauwert Rₐ in einem Bereich von 4 µm auf. Die Außenhülse 5 mit höherer Rauheit der Innenoberfläche zeigt eine verringerte Tendenz zu einer Relativbewegung der Außenhülse 5 auf dem Rohrende 9, insbesondere bei Temperaturwechselbeanspruchung.

Zwischen dem Stützkörper 8 und der Quetschhülse 4 ist ein Hohlraum ausgebildet, der zur Aufnahme eines Rohrendes 9 eines Kunststoffrohrs oder eines Metall-Kunststoff-Verbundrohrs ausgebildet ist. In axialer Richtung wird der Hohlraum durch eine Rohranschlagfläche 18 des Anschlagelements 6 begrenzt. In der Ausführungsform der erfindungsgemäßen Rohrverbindung 1 gemäß Fig. 1 ist das Rohrende 9 des Vollkunststoffrohrs, das ideal, d. h. gerade, abgelenkt worden ist, in den Hohlraum zwischen dem Stützkörper 8 und der Quetschhülse 4 aufgenommen. Das Anschlagelement 6 ist in der in Fig. 1 dargestellten Ausführungsform gewinkelt ausgebildet. Damit weist das Anschlagelement 6 einen vom Stützkörper 8 beabstandeten, überstehenden Bereich 19 auf. Dieser überstehende Bereich 19 ist in Richtung des offenen Endes 10 des Stützkörpers 8 des Verbindungselements 2 über die Rohranschlagfläche 18 hinaus versetzt angeordnet. Dadurch wird zwischen diesem überstehenden Bereich 19, der Rohranschlagfläche 18 und dem Stützkörper 8 des Verbindungselement 2 ein zusätzlicher Rohraufnahmeraum 20 gebildet. Dieser Rohraufnahmeraum 20 ist zum offenen Ende 10 des Stützkörpers 8 hin einseitig offen ausgebildet. Aufgrund des geraden Ablängens des Rohrendes 9 wird das Rohrende 9 symmetrisch auf dem Stützkörper 8 aufgenommen und kann beidseitig der zentralen Achse 13 an der Rohranschlagfläche 18 anliegen.

Die Außenhülse 5 kann in axialer Richtung bis zu dem überstehenden Bereich 19 auf die Quetschhülse 4 aufgeschoben werden. In dem zylindrischen Abschnitt zwischen den beiden Einführungsschrägen der Außenhülse 5 wirkt die Außenhülse 5 auf die Quetschhülse 4 ein, die wiederum das Rohrende 9 gegen den Stützkörper 8 des Verbindungselements 2 presst. Dadurch entspricht die Länge des zylindrischen Bereichs der Außenhülse 5 der Länge des Dichtbereichs in der in Fig. 1 gezeigten Ausführungsform der erfindungsgemäßen Rohrverbindung 1. Diese Länge des Dichtbereichs ist in Fig. 1 durch einen Doppelpfeil 21 gekennzeichnet.

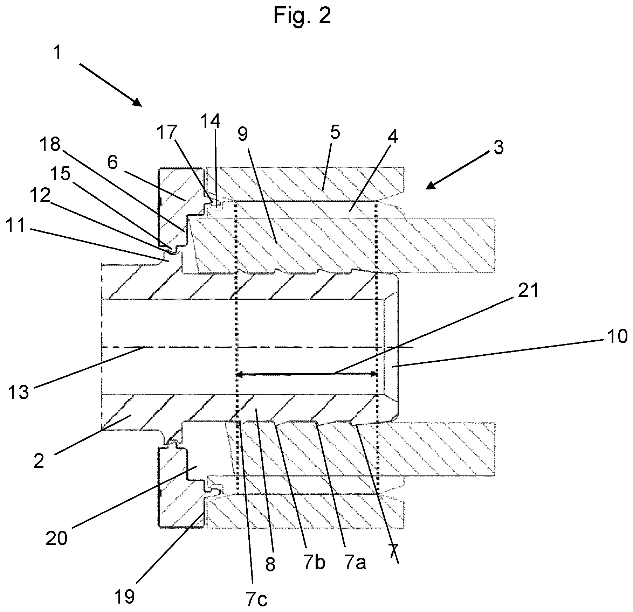

In Fig. 2 ist die Ausführungsform der erfindungsgemäßen Rohrverbindung 1 gemäß Fig. 1 erneut in einer partiellen Querschnittsdarstellung gezeigt, wobei das Rohrende 9 jedoch aufgrund eines schrägen Ansetzens der Rohrschere beim Ablängen im Gegensatz zum geraden Ablängen, wie es in Fig. 1 dargestellt ist, in einem Winkel von 10° abgelängt worden ist. In Fig. 2 ist zu erkennen, dass das schräg abgelängte Rohrende 9 im in Fig. 2 oberen Bereich der erfindungsgemäßen Rohrverbindung an der Rohranschlagfläche 18 des Anschlagelement 6 anliegt, während das Rohrende 9 im in Fig. 2 unteren Bereich von der Rohranschlagfläche 18 des Anschlagselements 6 beabstandet ist.

Die Außenhülse 5 befindet sich jedoch in einer identischen Position relativ zum Stützkörper 8 des Verbindungselements 2, die durch den überstehenden Bereich 19 definiert ist. Durch die Außenhülse 5 wird das Rohr mittels der Quetschhülse 4 wiederum über die Länge des zylindrischen Bereichs der Außenhülse 5 gegen den Stützkörper 8 des Verbindungselements 2 gedrückt. Da auch im in Fig. 2 unten dargestellten Bereich die gesamte Länge des zylindrischen Bereichs der Außenhülse 5 zur Dichtwirkung beiträgt, wird das schräge Ablängen des Rohrendes 9 durch Vorhandensein des zusätzlichen Rohraufnahmeraum 20 kompensiert. Somit wird die Dichtwirkung der erfindungsgemäßen Rohrverbindung 1 nicht durch das schräge Ablängen beeinträchtigt.

Zur Erzeugung der erfindungsgemäßen Rohrverbindung 1 wird zunächst die Außenhülse 5 über das abgelängte Rohrende 9 des Kunststoffrohres geschoben. Dann wird ein Verpresswerkzeug bzw. Schiebewerkzeug eingesetzt, dass zwei axial zueinander bewegbare Verpressjoche aufweist. Zum Aufschiebvorgang wird ein Verpressjoch an der dem Rohrende 9 abgewandten Seite des Anschlagelements 6 angelegt, während das andere Verpressjoch an der dem Rohrende 9 abgewandten Seite der Außenhülse 5 anliegt. Dann werden die Verpressjoche aufeinander zu bewegt, wodurch die als Schiebehülse ausgebildete Außenhülse 5 in axialer Richtung auf die Quetschhülse 4 aufgeschoben wird, um das Rohrende 9 am Stützkörper 8 zu fixieren. Durch das Aufschieben der Außenhülse 5 wird die Quetschhülse 4 komprimiert und das Material des Rohrendes 9 gegen den Stützkörper 8 des Verbindungselement 2 gepresst. Dadurch arbeiten sich die sägezahnförmigen umlaufenden Außenrippen 7, 7a, 7b, 7c des Stützkörpers 8 in das Material des Rohrendes 9, wodurch die Dichtigkeit der erfindungsgemäßen Rohrverbindung 1 erzielt wird. Das Rohrende 9 weist in der in Fig. 1 und Fig. 2 gezeigten Ausführungsform einen im wesentlichen konstanten Querschnitt auf. In alternativen Ausführungen kann auch ein aufgeweitetes Rohrende 9 in der erfindungsgemäßen Rohrverbindung 1 zum Einsatz kommen. Dazu wird nach dem Aufschieben der Außenhülse 5 über das Rohrende 9 ein Aufweitwerkzeug in das Rohrende 9 eingeführt und das Rohrende 9 wird mithilfe des Aufweitwerkzeugs aufgeweitet. Danach erfolgt ein Vorgehen, das dem beim Erzeugen einer erfindungsgemäßen Rohrverbindung 11 mit nicht aufgeweitetem Rohrende 9 entspricht. Erfindungsgemäß sind aber solche erfindungsgemäße Rohrverbindungen 1 mit nicht aufgeweitetem Rohrende 9 bevorzugt.

An ggf. vorhandene weitere Stützkörper 8 des Verbindungselements 2 können weitere Rohrenden 9 in der beschriebenen Weise unter Erzeugung weiterer erfindungsgemäßer Rohrverbindungen 1 angeschlossen werden. Das weitere Rohrende kann dabei einen zum Rohr des Rohrendes 9 des Stützkörpers 8 identischen Rohraufbau besitzen oder aber unterschiedlich zum Rohr des Rohrendes 9 des Stützkörpers 8 aufgebaut sein.

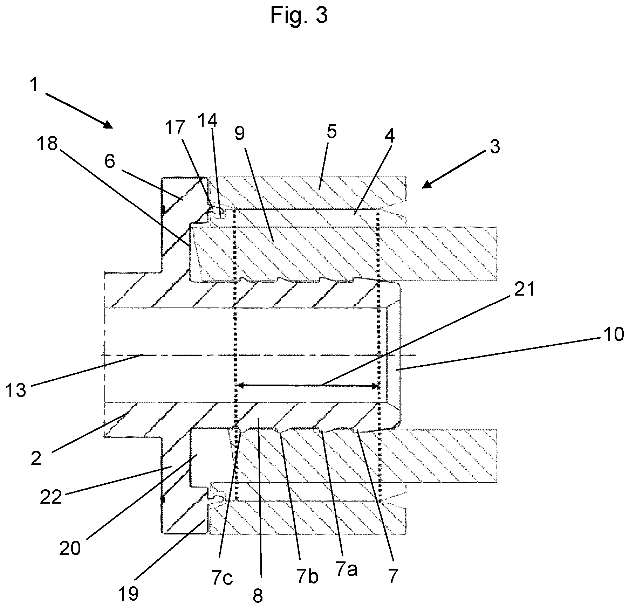

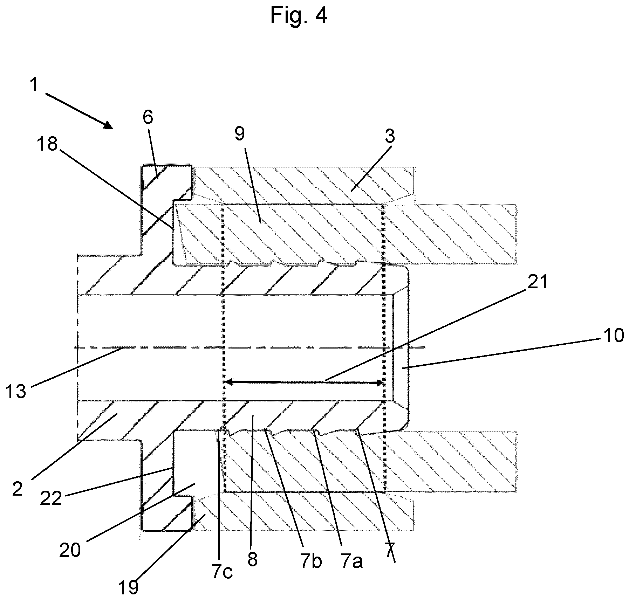

Im Folgenden wird die vorliegende Erfindung unter Bezugnahme auf weitere Ausführungsformen erläutert, die in Fig. 3 und Fig. 4 dargestellt sind. Um Wiederholungen zu vermeiden, wird hierin lediglich auf die Unterschiede zwischen den verschiedenen Ausführungsformen eingegangen. Ansonsten gelten die Ausführungen in Bezug auf die Ausführungsform gemäß Fig. 1 und Fig. 2 entsprechend. Identische Bezugszeichen stehen für gleiche Elemente.

In Fig. 3 ist eine weitere Ausführungsform der Rohrverbindung 1 (nicht erfindungsgemäß) in einer partiellen Querschnittsdarstellung gezeigt. Die Ausführungsform gemäß Fig. 3 unterscheidet sich von der in Fig. 1 und Fig. 2 gezeigten Ausführungsform darin, dass es kein Anschlagelement 6 aufweist. Vielmehr sind die Anschlagfläche 18 und der überstehende Bereich 19 an einem umlaufenden Kragen 22 angeordnet. Ein Verbindungselement mit einem derartigen umlaufenden Kragen 22, der einen überstehenden Bereich 19 aufweist, ist jedoch nur mit relativ hohem Aufwand herstellbar. Auch gemäß dieser Ausführungsform kann die durch das schräg abgelängte Rohrende 9 bedingte Problemtaik einer ggf. mangelnden Dichtheit durch das Vorhandensein des zusätzlichen Rohraufnahmeraum 20 kompensiert werden, sodass die gesamte Länge des zylindrischen Bereichs der Außenhülse 5 als Länge des Dichtbereich der erfindungsgemäßen Rohrverbindung 1 wirksam ist.

Eine weitere Ausführungsform der Rohrverbindung 1 (nicht erfindungsgemäß) zeigt Fig. 4 in einer partiellen Querschnittsdarstellung. Darin ist in dieser Ausführungsform die fRohrverbindung 1 als Schiebehülsenverbindung ausgestaltet. Dabei ist die Fixierhülse 3 einteilig als Schiebehülse ausgebildet. Die Rohrverbindung 1 umfasst somit keine Quetschhülse 4. Daher ist es auch nicht notwendig, dass das Verbindungselement 2 ein fixierhülsenseitiges Eingriffselement 17 umfasst. Darüber hinaus weist das Verbindungselement 2 gemäß Fig. 4 auch kein Anschlagelement 6 auf. Auch in dieser Ausführungsform des e Verbindungselements 2 sind die Anschlagfläche 18 und der überstehende Bereich 19 an einem umlaufenden Kragen 22 angeordnet. Ebenso ist gemäß dieser Ausführungsform die gesamte Länge des zylindrischen Bereichs der Außenhülse 5 als Länge des Dichtbereich der Rohrverbindung wirksam.

Bei dem Rohr des Rohrendes 9 handelt es sich gemäß der dargestellten Ausführungsform der vorliegenden Erfindung um ein Vollkunststoffrohr aus vernetztem Polyethylen (PE-X, insbesondere PE-Xa, PE-Xb oder PE-Xc). Alternativ dazu sind als Rohr in anderen Ausführungsformen der vorliegenden Erfindung auch Vollkunststoffrohre aus anderen Materialien sowie Kunststoff-Verbundrohre und Metall-Kunststoff-Verbundrohre verwendbar. Bevorzugt ist die dem lichten Durchmesser des Rohrs zugewandte Schicht im Fall von Kunststoffverbundrohren und Metall-Kunststoff-Verbundrohren jedoch eine Schicht aus vernetztem Polyethylen (PE-X), insbesondere PE-Xa, PE-Xb oder PE-Xc.

Bei dem Verbindungselement 2 kann es sich um ein Gewindeformteil oder um ein gewindeloses Formteil, also um ein Verbindungselement, das kein Gewinde aufweist, handeln. Dies beinhaltet insbesondere Anschlussstücke, Anschlusswinkel, Mehrfachverteiler, T-Stücke, Wand-T-Stücke, Wandwinkel, Systemübergänge, Übergangsstücke, gewinkelte Übergangsstücke, die jeweils kein Gewinde aufweisen. Dementsprechend bezieht sich der Begriff "Gewindeformteil" auf ein Verbindungselement, das mindestens ein Gewindeformteil besitzt. Dies beinhaltet insbesondere Anschlusstücke, Anschlusswinkel, Mehrfachverteiler, T-Stücke, Wand-T-Stücke, Wandwinkel, Systemübergänge, Übergangsstücke und gewinkelte Übergangsstücke, die jeweils mindestens ein Innen- und/oder Außengewinde aufweisen.

Die vorliegende Erfindung wurde unter Bezugnahme auf die in den Figuren gezeigten Ausführungsformen der vorliegenden Erfindung im Detail beschrieben. Es versteht sich, dass die vorliegende Erfindung nicht auf die gezeigten Ausführungsformen beschränkt ist, sondern sich der Umfang der vorliegenden Erfindung aus den beiliegenden Ansprüchen ergibt.

## Patentansprüche

1. Rohrverbindung (1) zwischen einem Rohrende (9) eines Kunststoffrohrs, eines Kunststoff-Verbundrohrs oder eines Metall-Kunststoff-Verbundrohrs und einem Verbindungselement (2), umfassend:
ein Verbindungselement (2), das mindestens einen mit mehreren umlaufenden Außenrippen (7, 7a, 7b, 7c) versehenen Stützkörper (8) zum Aufschieben des Rohrendes (9) umfasst, der mit einem Anschlagelement (6) verbunden ist, das eine Rohranschlagfläche (18) umfasst;
ein Kunststoffrohr, ein Kunststoff-Verbundrohr oder ein Metall-Kunststoff-Verbundrohr, in dessen eines Rohrende (9) der Stützkörper (8) des Verbindungselements (2) eingesetzt ist; und
mindestens eine Fixierhülse (3), die einen Abschnitt des Rohrendes (9) gegen den Stützkörper (8) zur Fixierung des Rohrendes (9) des Verbindungselements (2) auf dem Stützkörper (8) fixiert,
wobei das Anschlagelement (6) mindestens einen vom Stützkörper (8) beabstandeten, überstehenden Bereich (19) aufweist, der in axialer Richtung in Richtung des offenen Endes (10) des Stützkörpers (8) über die Rohranschlagfläche (18) hinausragt und der die Position der Fixierhülse (3) oder eines Bestandteils der Fixierhülse (3) in axialer Richtung begrenzt, und die Fixierhülse (3) mehrteilig zumindest aus einer Quetschhülse (4), die am Rohrende (9) anliegt, und einer Außenhülse (5), die die Quetschhülse (4) gegen das Rohrende (9) presst, aufgebaut ist,
**dadurch gekennzeichnet, dass**
die Fixierhülse (3), insbesondere die Außenhülse (5), als Schiebehülse zum axialen Aufschieben ausgebildet ist, und das Anschlagelement (6) als separates Bauteil ausgebildet ist.

2. Rohrverbindung (1) nach Anspruch 1, **dadurch gekennzeichnet, dass** zwischen dem Stützkörper (8), der Rohranschlagfläche (18) und dem überstehenden Bereich (19) ein zum offenen Ende (10) des Stützkörpers (9) einseitig offener, zusätzlicher Rohraufnahmeraum (20) ausgebildet ist.

3. Rohrverbindung (1) nach Anspruch 1 oder Anspruch 2, **dadurch gekennzeichnet, dass** die Rohranschlagfläche (18) und/oder der überstehende Bereich (19) zumindest teilweise an dem Anschlagelement (6) angeordnet sind.

4. Rohrverbindung (1) nach einem der Ansprüche 1 bis 3, **dadurch gekennzeichnet, dass** das Verbindungselement (2) eine Eingriffsnut (12) aufweist und das Anschlagelement (6) mindestens ein verbindungselementseitiges Eingriffselement (15) aufweist, das in die Eingriffsnut (12) des Verbindungselements (2) eingreift.

5. Rohrverbindung (1) nach Anspruch 4, **dadurch gekennzeichnet, dass** die Eingriffsnut (12) in einer Erhöhung (11) am Verbindungselement (2) ausgebildet ist, die den axialen Abschluss des Stützkörpers (8) bildet.

6. Rohrverbindung (1) nach einem der Ansprüche 1 bis 5, **dadurch gekennzeichnet, dass** das Anschlagelement (6) ein fixierhülsenseitiges Eingriffselement (17) aufweist, das mit einer kooperierenden Aufnahme (14) der Fixierhülse (3) in Eingriff befindlich ist.

7. Rohrverbindung (1) nach einem der Ansprüche 1 bis 6, **dadurch gekennzeichnet, dass** die Fixierhülse (4, 5) zumindest teilweise durch das Anschlagelement (6) mit dem Verbindungselement (2) verbunden ist.

8. Rohrverbindung (1) nach einem der Ansprüche 1 bis 7, **dadurch gekennzeichnet, dass** die Fixierhülse (3), insbesondere die Quetschhülse (4) aus einem elastisch verformbaren polymeren Material ausgebildet ist.

## Claims

1. Pipe connection (1) between a pipe end (9) of a plastic pipe, a plastic composite pipe or a metal-plastic composite pipe and a connecting element (2), comprising:
a connecting element (2), which comprises at least one support body (8),
provided with a plurality of circumferential outer ribs (7, 7a, 7b, 7c), for pushing on the pipe end (9), said support body being connected to a stop element (6), which comprises a pipe stop surface (18);
a plastic pipe, a plastic composite pipe or a metal-plastic composite pipe, into one pipe end (9) of which the support body (8) of the connecting element (2) is inserted; and
at least one fixing sleeve (3), which fixes a section of the pipe end (9) against the support body (8) for fixing the pipe end (9) of the connecting element (2) on the support body (8),
wherein the stop element (6) has at least one protruding region (19), spaced apart from the support body (8), which protrudes in the axial direction in the direction of the open end (10) of the support body (8) beyond the pipe stop surface (18) and which limits the position of the fixing sleeve (3) or of a component of the fixing sleeve (3) in the axial direction, and the fixing sleeve (3) is constructed in multiple parts at least from a compression sleeve (4), which bears against the pipe end (9), and an outer sleeve (5), which presses the compression sleeve (4) against the pipe end (9),
**characterized in that**
the fixing sleeve (3), in particular the outer sleeve (5), is designed as a sliding sleeve for axial pushing-on, and the stop element (6) is designed as a separate component.

2. Pipe connection (1) according to claim 1, **characterized in that** an additional pipe receiving space (20), open on one side toward the open end (10) of the support body (9), is formed between the support body (8), the pipe stop surface (18) and the protruding region (19).

3. Pipe connection (1) according to claim 1 or claim 2, **characterized in that** the pipe stop surface (18) and/or the protruding region (19) are arranged at least partially on the stop element (6).

4. Pipe connection (1) according to any one of claims 1 to 3, **characterized in that** the connecting element (2) has an engagement groove (12) and the stop element (6) has at least one connecting-element-side engagement element (15), which engages in the engagement groove (12) of the connecting element (2).

5. Pipe connection (1) according to claim 4, **characterized in that** the engagement groove (12) is formed in a raised portion (11) on the connecting element (2), which forms the axial termination of the support body (8).

6. Pipe connection (1) according to any one of claims 1 to 5, **characterized in that** the stop element (6) has a fixing-sleeve-side engagement element (17), which is in engagement with a cooperating receptacle (14) of the fixing sleeve (3).

7. Pipe connection (1) according to any one of claims 1 to 6, **characterized in that** the fixing sleeve (4, 5) is connected to the connecting element (2) at least partially by means of the stop element (6).

8. Pipe connection (1) according to any one of claims 1 to 7, **characterized in that** the fixing sleeve (3), in particular the compression sleeve (4), is formed from an elastically deformable polymeric material.

## Revendications

1. Raccord de tuyau (1) entre une extrémité de tuyau (9) d'un tuyau en matière plastique, d'un tuyau composite en matière plastique ou d'un tuyau composite métal-matière plastique et un élément de raccordement (2), comprenant :
un élément de raccordement (2), qui comprend au moins un corps de support (8), pourvu de plusieurs nervures extérieures circonférentielles (7, 7a, 7b, 7c), pour l'emmanchement de l'extrémité de tuyau (9), lequel est relié à un élément de butée (6), qui comprend une surface de butée de tuyau (18) ;
un tuyau en matière plastique, un tuyau composite en matière plastique ou un tuyau composite métal-matière plastique, dans l'une des extrémités de tuyau (9) duquel le corps de support (8) de l'élément de raccordement (2) est inséré ; et
au moins une douille de fixation (3), qui fixe une section de l'extrémité de tuyau (9) contre le corps de support (8) afin de fixer l'extrémité de tuyau (9) de l'élément de raccordement (2) sur le corps de support (8),
dans lequel l'élément de butée (6) présente au moins une zone en saillie (19), espacée du corps de support (8), qui dépasse, dans la direction axiale en direction de l'extrémité ouverte (10) du corps de support (8), au-delà de la surface de butée de tuyau (18) et qui limite la position de la douille de fixation (3) ou d'un constituant de la douille de fixation (3) dans la direction axiale, et la douille de fixation (3) est réalisée en plusieurs parties au moins à partir d'une douille de compression (4), qui est en appui contre l'extrémité de tuyau (9), et d'une douille extérieure (5), qui presse la douille de compression (4) contre l'extrémité de tuyau (9),
**caractérisé en ce que**
la douille de fixation (3), en particulier la douille extérieure (5), est conçue comme une douille coulissante pour un emmanchement axial, et l'élément de butée (6) est conçu comme un composant séparé.

2. Raccord de tuyau (1) selon la revendication 1, **caractérisé en ce qu'**un espace supplémentaire de réception de tuyau (20), ouvert d'un seul côté vers l'extrémité ouverte (10) du corps de support (9), est formé entre le corps de support (8), la surface de butée de tuyau (18) et la zone en saillie (19).

3. Raccord de tuyau (1) selon la revendication 1 ou la revendication 2, **caractérisé en ce que** la surface de butée de tuyau (18) et/ou la zone en saillie (19) sont disposées au moins partiellement sur l'élément de butée (6).

4. Raccord de tuyau (1) selon l'une quelconque des revendications 1 à 3, **caractérisé en ce que** l'élément de raccordement (2) présente une rainure d'engagement (12) et l'élément de butée (6) présente au moins un élément d'engagement côté élément de raccordement (15), qui s'engage dans la rainure d'engagement (12) de l'élément de raccordement (2).

5. Raccord de tuyau (1) selon la revendication 4, **caractérisé en ce que** la rainure d'engagement (12) est formée dans une surélévation (11) sur l'élément de raccordement (2), laquelle forme la terminaison axiale du corps de support (8).

6. Raccord de tuyau (1) selon l'une quelconque des revendications 1 à 5, **caractérisé en ce que** l'élément de butée (6) présente un élément d'engagement côté douille de fixation (17), qui est en engagement avec un logement coopérant (14) de la douille de fixation (3).

7. Raccord de tuyau (1) selon l'une quelconque des revendications 1 à 6, **caractérisé en ce que** la douille de fixation (4, 5) est reliée au moins partiellement à l'élément de raccordement (2) par l'intermédiaire de l'élément de butée (6).

8. Raccord de tuyau (1) selon l'une quelconque des revendications 1 à 7, **caractérisé en ce que** la douille de fixation (3), en particulier la douille de compression (4), est réalisée en un matériau polymère élastiquement déformable.
